# EUROPÄISCHE PATENTSCHRIFT

(11) **EP 2 961 091 B1**
(45) Veröffentlichungstag und Bekanntmachung des Hinweises auf die Patenterteilung: **21.07.2021**
(21) Anmeldenummer: 15161816.2
(22) Anmeldetag: 31.03.2015
(51) Int. Cl.: H04K 1/02, H04K 3/00, H04B 1/707, H04L 9/22

(54) **BEREITSTELLEN EINES GESICHERTEN REPLIKA-PSEUDO-ZUFALLSRAUSCHSIGNALS**
PROVISION OF A SECURE REPLICA PSEUDO NOISE SIGNAL
MISE À DISPOSITION D'UNE RÉPLIQUE SÉCURISÉE D'UN CODE DE BRUIT PSEUDO-ALÉATOIRE

(30) Priorität: 27.06.2014 DE 102014212467
(43) Veröffentlichungstag der Anmeldung: 30.12.2015
(73) Patentinhaber: Siemens Aktiengesellschaft, 80333 München (DE)
(72) Erfinder: Falk, Rainer, 85586 Poing (DE)

(56) Entgegenhaltungen:
- GB-A- 1 279 224
- None

## Beschreibung

Die Erfindung betrifft ein Verfahren sowie eine Bereitstellungseinheit zum Bereitstellen eines gesicherten Replika-Pseudo-Zufallsrauschsignals an eine Empfängereinheit.

Pseudo-zufällige Codefolgen, sogenannten Pseudo-Zufallsrauschcodes oder Pseudo-Random-Number-Codes, kurz PRNC oder PRN-Codes, werden beispielsweise bei der Funkübertragung verwendet. Es handelt sich dabei um Spreizcodes, welche eine Frequenzspreizung eines Nachrichtensignals bewirken. Durch die breitbandige Übertragung weist ein solches Signal eine hohe Robustheit gegenüber Störungen auf. Spreizungsfolgen werden beispielsweise in Satellitennavigationssystemen wie GPS, Glonass, Beidou oder Galileo verwendet. Dabei liegt das empfangene Satellitensignal im Allgemeinen unterhalb eines Rauschpegels. Ein Empfänger kann das ausgestrahlte Signal erst durch Korrelation mit einem ihm selbst vorliegenden passenden PRN-Code detektieren und decodieren. Es handelt sich dabei in der Regel um den identischen PRN-Code, der beispielsweise bereits im Empfänger vorliegen kann. Man kann auch von einem Replika-PRN-Code sprechen, welcher ein rekonstruierter oder nachgebildeter oder als zweite Ausführung vorliegender PRN-Code ist.

Es ist bekannt, kryptographische PRN-Codes zu verwenden. Die Codefolge wird dabei abhängig von einem kryptographischen Schlüssel erzeugt. Ein Empfänger kann den passenden PRN-Code zur Decodierung des Empfangssignals nur generieren, wenn er den zur Aussendung des Signals vom Sender verwendeten PRN-Code kennt. Dazu benötigt er den kryptographischen Schlüssel.

Der Empfänger, vor allem die Signalverarbeitung auf dem Empfänger, ist dabei aufwändig durch Sicherheitsmechanismen vor Angreifern zu schützen. Beispielsweise muss ein FPGA, auf dem die kryptographischen Signale bearbeitet werden, über Abstrahlschutz oder Tamperschutz aufwändig und damit teuer gesichert werden.

Es ist allgemein bekannt, Rohdaten eines empfangenen GPS-Signals zu digitalisieren und aufzuzeichnen. Die Rohdaten werden zu einem Cloud-Service übertragen, so dass die Signalverarbeitung auf einem Server realisiert wird. Der Server kann dabei speziell geschützt werden, so dass die securitykritische kryptographische Signalverarbeitung in einem sicheren Rechenzentrum erfolgt. Dabei muss allerdings ein großer Anteil der Serverumgebung inklusiver genutzter Datenübertragungswege wiederum aufwändig geschützt werden.

Aus der Druckschrift GB 1 279 224 A ist die Verwendung von zufälligen oder zufallsähnlichen Pulsfolgen bekannt, welche identisch auf einem Sender und einem entsprechenden Empfänger vorliegen. Dazu sind entsprechende Pulsgeneratoren auf beiden Seiten verfügbar, die die Codes identisch generieren.

Vor diesem Hintergrund ist es Aufgabe der vorliegenden Erfindung, ein verbessertes sicheres Verfahren sowie eine sichere Bereitstellungseinheit zum Bereitstellen eines gesicherten Replika-Pseudo-Zufallsrauschsignals an eine Empfängereinheit zu schaffen.

Diese Aufgabe wird durch die unabhängigen Ansprüche gelöst. Vorteilhafte Ausgestaltungen und Weiterbildungen sind in den Unteransprüchen angegeben.

Die Erfindung betrifft ein Verfahren zum Bereitstellen eines gesicherten Replika-Pseudo-Zufallsrauschsignals an eine Empfängereinheit, wobei ein Replika-Pseudo-Zufallsrauschcode durch eine empfängerseitige Bereitstellungseinheit mit einem Rauschsignal moduliert wird. Der Replika-Pseudo-Zufallsrauschcode ist hierbei durch das aufmodulierte bzw. hinzugefügte Rauschsignal geschützt. Dadurch wird verhindert oder zumindest deutlich erschwert, dass aus diesem gesicherten Signal der darin enthaltene Replika-Pseudo-Zufallsrauschcode extrahiert werden kann.

Unter einem Replika-Pseudo-Zufallsrauschcode wird in der vorliegenden Anmeldung eine Codefolge verstanden, welche in einem Korrelationsverfahren empfängerseitig eingesetzt wird, um ein Empfangssignal von einem Sender detektieren bzw. decodieren zu können, wobei der Sender einen zu dem Replika-Pseudo-Zufallsrauschcode gehörigen Pseudo-Zufallsrauschcode zur Modulation des Signals verwendet hat. Ein Replika-Pseudo-Zufallsrauschcode bildet somit gemeinsam mit einem Pseudo-Zufallsrauschcode ein Paar, welches zueinander passen und insbesondere hinsichtlich der Bitfolge des Codes identisch sein muss, damit der Pseudo-Zufallsrauschcode des Empfangssignals empfängerseitig detektierbar bzw. decodierbar ist. Bei einem vom Sender verwendeten kryptographisch erzeugten Pseudo-Zufallsrauschcode muss überdies auch empfängerseitig der passende, insbesondere gleiche, symmetrische Schlüssel vorhanden sein, damit der passende Replika-Pseudo-Zufallsrauschcode erzeugt werden kann.

Empfängerseitig wird der Replika-Pseudo-Zufallsrauschcode mit einem Rauschsignal moduliert. D.h., dem Replika-Pseudo-Zufallsrauschcode wird ein künstlich erzeugtes Rauschen überlagert, so dass der Replika-Pseudo-Zufallsrauschcode auch empfängerseitig, beispielsweise innerhalb eines Empfängers oder auf einem Übertragungsweg zwischen Bereitstellungseinheit und Empfänger, nicht aus dem verrauschten Signal auslesbar ist. Somit wird das Replika-Pseudo-Zufallsrauschsignal vor einem Auslesen des Replika-Pseudo-Zufallsrauschcodes geschützt. Das Replika-Pseudo-Zufallsrauschsignal ist somit gesichert, sobald es die empfängerseitige Bereitstellungseinheit verlässt. Ein Manipulationsschutz oder Abstrahlschutz muss empfängerseitig nur für einen sehr begrenzten Bereich sichergestellt werden. Vorteilhafterweise wird lediglich die Bereitstellungseinheit besonders geschützt, beispielsweise durch Tamper-Schutzmaßnahmen. Der schutzbedürftige Replika-Pseudo-Zufallsrauschcode wird der Empfängereinheit somit nur in einer Form bereitgestellt, in der er nicht praktikabel missbräuchlich verwendet werden kann. Insbesondere kann er nicht oder nur eingeschränkt verwendet werden, um selbst ein Störsignal auszusenden. Würde der Replika-Pseudo-Zufallsrauschcode in ungesicherter Form auf dem Empfänger vorliegen, so kann er insbesondere verwendet werden, um ein Störsignal zu modulieren. Es kann somit durch einen manipulierten Empfänger vorgetäuscht werden, in Besitz des ursprünglichen Pseudo-Zufallsrauschcodes zu sein, und damit rechtmäßiger Sender eines in Wirklichkeit manipulierten Signals, beispielsweise Satellitensignals, zu sein.

Für die Erzeugung kryptographischer Pseudo-Zufallsrauschcodes - und damit auch kryptographischer Replika-Pseudo-Zufallsrauschcodes - wird ein kryptographischer Schlüssel benötigt. Die damit verbundenen kryptographischen Algorithmen können insbesondere zeitaufwendig und ressourcenverbrauchend sein. Das gesicherte Replika-Pseudo-Zufallsrauschsignal kann empfängerseitig auf vorteilhafte Weise über einen längeren Zeitraum abgelegt, d.h. gespeichert werden, da ein Missbrauch auch bei Auslesen des gesicherten Replika-Pseudo-Zufallsrauschsignals aus einem Speicherbereich nicht ohne weiteres möglich ist. Somit kann eine Empfängereinheit oder ein Empfänger das gesicherte Replika-Pseudo-Zufallsrauschsignal auch vor einer durchzuführenden Signalverarbeitung, beispielsweise bevor ein Empfangssignal empfangen wird, bereits empfangen und gespeichert werden. Für die Verarbeitung eines echtzeitkritischen Signals kann dann vorteilhaft die Signalverarbeitungszeit reduziert werden, da das gesicherte Replika-Pseudo-Zufallsrauschsignal bereits vorliegt.

Gemäß einer Ausgestaltung wird aus dem Replika-Pseudo-Zufallsrauschcode ein moduliertes Replika-Pseudo-Zufalls-rauschsignal generiert. Vorteilhafterweise wird der Replika-Pseudo-Zufallsrauschcode, welcher insbesondere eine Bitfolge ist, als digitalisiertes Signal dargestellt. In einem Modulationsverfahren wird daher empfängerseitig aus dem Replika-Pseudo-Zufallsrauschcode zunächst ein moduliertes Replika-Pseudo-Zufallsrauschsignal erzeugt, bevor die weiteren Modulationsschritte vorgenommen werden.

Gemäß einer Ausgestaltung weist das Rauschsignal einen höheren Pegel auf als das modulierte Replika-Pseudo-Zufalls-rauschsignal. Der Replika-Pseudo-Zufallsrauschcode soll in dem zusätzlich hinzugefügten, künstlichen Rauschen versteckt werden. Dazu muss ein Pegel des Rauschsignals hoch genug sein, damit der charakteristische Code nicht ausgelesen werden kann. Vorteilhafterweise wird das Rauschsignal auf das modulierte Replika-Pseudo-Zufallsrauschsignal, welches insbesondere das digitalisierte Signal aus dem Replika-Pseudo-Zufallsrauschcode ist, aufmoduliert. Ein Korrelator, dem das Replika-Pseudo-Zufallsrauschsignal zur Dekodierung bereitgestellt wird, korreliert das Empfangssignal mit dem Replika-Pseudo-Zufallsrauschsignal. Der Rauschpegel wird entsprechend vorteilhaft an die Pegelhöhe des modulierten Replika-Pseudo-Zufallsrauschsignals angepasst.

Gemäß einer Ausgestaltung wird das gesicherte Replika-Pseudo-Zufallsrauschsignal mit einem durch die Empfängereinheit empfangenen Empfangssignal korreliert. Dabei wird insbesondere kontinuierlich ein durch die Empfängereinheit empfangbares Empfangssignal in einer Signalverarbeitung korreliert. Somit können sich Abschnitte abwechseln, in denen ein Signal, beispielsweise ein Datenübertragungssignal oder ein Satellitensignal, durch die Korrelation erkannt wird und in welchem ein Ergebnis der Korrelation darin besteht, dass der Empfänger kein von einem Sender ausgestrahltes Signal erkennt.

Gemäß einer Ausgestaltung ist ein in einem durch die Empfängereinheit empfangenen Empfangssignal enthaltener Pseudo-Zufallsrauschcode mittels einer Korrelationsmethode mit Hilfe des gesicherten Replika-Pseudo-Zufallsrauschsignals decodierbar. Somit sind die Signale von einem Sender, welche mit dem Pseudo-Zufallsrauschcode moduliert wurden, für die Empfängereinheit erkennbar. Nur für zusammenpassende Pseudo-Zufallsrauschcodes und Replika-Pseudo-Zufallsrauschcodes ermöglicht die Korrelationsmethode ein Decodieren des Empfangssignals. Das dem Replika-Pseudo-Zufallsrauschcode überlagerte Rauschsignal ist dabei für das Durchführen der Korrelation nicht schädlich. Das Rauschsignal geht in die Korrelation ein und wirkt wie ein absichtlicher Störer. Bei einem entsprechenden Codierungsverfahren, welches robust unter Störungen bis zu einem gewissen Grad ist, ist das Decodieren dennoch möglich.

Gemäß einer Ausgestaltung wird ein in einem durch die Empfängereinheit empfangenen Empfangssignal enthaltenes Pseudo-Zufallsrauschsignal mittels einer Korrelationsmethode ausgewertet. Es kann dabei beispielsweise ein Zeitversatz zwischen dem Empfangssignal mit dem Pseudo-Zufallsrauschsignal und dem empfängerseitig erzeugten Replika-Pseudo-Zufallsrauschsignal ermittelt werden. Es können ferner Zeitinformationen oder Positionsinformationen oder Entfernungsinformationen bestimmt werden, insbesondere sofern mehrere Satellitensignale durch die Empfängereinheit empfangen werden.

Gemäß einer Ausgestaltung wird der Replika-Pseudo-Zufallsrauschcode durch einen Replika-Pseudo-Zufallsrauschcode-Generator der Bereitstellungseinheit oder einen externen mit der Bereitstellungseinheit verbindbaren Replika-Pseudo-Zufallsrauschcode-Generator generiert.

Da der Replika-Pseudo-Zufallsrauschcode als solcher ungesichert ist, muss bei einer Übertragung von einer externen Einheit die Integrität und Nichtabhörbarkeit des Übertragungsweges sichergestellt sein. Der Replika-Pseudo-Zufallsrauschcode-Generator ist insbesondere über Schutzmaßnahmen vor Auslesen oder unberechtigtem Zugriff zu schützen.

Gemäß einer Ausgestaltung wird als Replika-Pseudo-Zufallsrauschcode ein kryptographischer Replika-Pseudo-Zufallsrauschcode generiert. Die sichere Erzeugung des kryptographischen Replika-Pseudo-Zufallsrauschcodes hängt dabei von der Verfügbarkeit und Geheimhaltung eines kryptographischen Schlüssels ab. Die Auswertung eines Empfangssignals mit einem Pseudo-Zufallsrauschanteil mittels einer Korrelation mit dem Replika-Pseudo-Zufallsrauschsignal kann somit Auskunft über die Integrität des vom Sender ausgesendeten Empfangssignals bestätigen, falls die Korrelation eine Übereinstimmung von kryptographischem Pseudo-Zufallsrauschcode und kryptographischem Replika-Pseudo-Zufallsrauschcode ergibt. Somit verfügen Sender und Empfänger über den gleichen kryptographischen Schlüssel.

Gemäß einer Ausgestaltung wird das Rauschsignal als ein zufälliges oder pseudo-zufälliges Rauschsignal ausgebildet. Das Rauschsignal soll dabei natürliches, nicht-deterministisches Rauschen nachahmen und muss die Anforderungen erfüllen, dass einerseits der Replika-Pseudo-Zufallsrauschcode im modulierten Replika-Pseudo-Zufallsrauschsignal nicht erkennbar sein soll und andererseits die Störung durch das Rauschsignal nicht so groß sein darf, dass die Korrelation mit dem Empfangssignal ein enthaltenes Pseudo-Zufalls-Rauschsignal nicht erkennen lässt.

Gemäß einer Ausgestaltung wird der Replika-Pseudo-Zufallsrauschcode durch die Bereitstellungseinheit durch eine Addition mit dem Rauschsignal moduliert. Dabei handelt es sich um eine wenig aufwendige, insbesondere ressourcensparende Modulationsvariante. Es sind jedoch auch andere Modulationsverfahren geeignet, um aus einem Replika-Pseudo-Zufallsrauschcode und einem Rauschsignal ein geschütztes Replika-Pseudo-Zufallsrauschsignals zu bilden. Grundsätzlich sind dazu beliebige Modulatoren, z.B. ein Gegentaktmischer, Ringmischer bzw. Ringmodulator, ein Übertrager, oder Signal-verknüpfungen wie Addition, Subtraktion, Multiplikation, Tabellen-Lookups etc. möglich. Diese Verfahren können elektronisch realisiert sein, aber ebenso digital in Form einer digitalen Signalverarbeitung durch einen digitalen Signalprozessor, kurz DSP, oder durch eine digitale Signalverarbeitungsanordnung auf einem programmierbaren Logikbaustein oder FPGA oder einem ASIC oder einem Signalverarbeitungsintegrierten Schaltkreis.

Gemäß einer Ausgestaltung wird das Rauschsignal durch einen Rauschgenerator der Bereitstellungseinheit oder einem externen, mit der Bereitstellungseinheit verbindbaren Rauschgenerator generiert. Auf vorteilhafte Weise ist das Rauschsignal nicht besonders vor einem Ausspähen zu schützen und kann durch eine dafür geeignete separate Einheit bereitgestellt werden.

Gemäß einer Ausgestaltung wird ein Pegel des Rauschsignals konstant über der Zeit oder zeitlich variabel generiert. Somit kann vorteilhafterweise berücksichtigt werden, mit welcher Signalstärke des Empfangssignals am erwarteten Ort des Empfängers gerechnet werden kann. Somit kann gezielt eingeschränkt werden, dass der Empfänger gegebenenfalls nur ein Empfangssignal detektieren kann, soweit dessen Signalstärke einen Schwellenwert überschreitet. Befindet sich der Empfänger zu weit entfernt vom erwarteten Ort, so kann er trotz des Korrelationsverfahrens und Vorhandensein des passenden Replika-Pseudo-Zufallsrauschcodes das Pseudo-Zufallsrauschsignal nicht detektieren. Somit kann ferner gezielt erreicht werden, dass ein Empfänger nur eingeschränkte Robustheit gegenüber Störern, sogenannten Interferern, aufweist.

Gemäß einer Ausgestaltung wird das gesicherte Replika-Pseudo-Zufallsrauschsignal der Empfängereinheit von einem Sicherheitsmodul oder einem Sicherheits-Cloud-Server bereitgestellt, insbesondere kontinuierlich oder in Form einzelner Abschnitte oder ergänzt durch Zusatzinformation. Der Empfänger kann somit verteilt realisiert werden und die Bereitstellungseinheit als externe Einheit, insbesondere als Sicherheitsmodul oder Sicherheits-Cloud-Server separat zu einer Empfängereinheit ausgebildet sein. Da das gesicherte Replika-Pseudo-Zufallsrauschsignal vor einem Auslesen geschützt ist, kann es insbesondere ausreichend sein, das Sicherheitsmodul oder den Sicherheits-Cloud-Server mit entsprechenden Sicherheitsmaßnahmen gegen Angreifer zu schützen. Damit kann der Bereich eines Empfängers, der mit Schutzmechanismen zu schützen ist, erheblich verkleinert werden. Insbesondere kann dieser geschützte, gesicherte Bereich auf einem Server realisiert sein und das gesicherte Replika-Pseudo-Zufallsrauschsignal über eine Netzwerkverbindung bereitgestellt werden. Diese kann zusätzlich durch Sicherheitsmechanismen, wie eine kryptographisch gesicherte Kommunikationsverbindung, geschützt werden.

Gemäß einer Ausgestaltung weist das gesicherte Replika-Pseudo-Zufallsrauschsignal einen Marker auf zur Kennzeichnung eines empfängerseitig erzeugten Signals. Somit kann ein Empfänger eines Empfangssignals nach einer Decodierung ein vermeintliches Pseudo-Zufallsrauschsignal erkennen, sieht dann allerdings zusätzlich zu dem vermeintlichen Pseudo-Zufallsrauschsignal insbesondere einen Ungültig-Marker oder ein Invalid-Marker-Signal oder einen Invalid-Marker-Code, der erkennen lässt, dass es sich um ein empfängerseitig generiertes Replika-Pseudo-Zufallsrauschsignal mit Marker handelt. Somit kann ein Empfänger unterscheiden, ob es sich um ein Originalsignal, beispielsweise ein Satellitensignal, oder ein von einer Empfängereinheit, insbesondere einem manipulierten Empfänger ausgestrahltes Signal handelt. Ein Invalid-Marker-Signal ist vorzugsweise als weiterer Pseudo-Zufallsrauschcode unterhalb des Rauschsignals im Replika-Pseudo-Zufallsrauschsignal enthalten. Trotz Kenntnis des Invalid-Marker-Pseudo-Zufallsrauschcodes ist es somit kaum möglich, das Invalid-Marker-Signal aus dem Replika-Pseudo-Zufallsrauschsignal zu entfernen, ohne dabei den enthaltenen Replika-Pseudo-Zufallsrauschcode, d.h. den eigentlichen Nutzcode, den der Empfänger für die Korrelation und die Codierung benötigt, zu zerstören oder zu verändern.

Die Erfindung betrifft ferner eine Bereitstellungseinheit zum Bereitstellen eines gesicherten Replika-Pseudo-Zufallsrauschsignals an eine Empfängereinheit mit einem Modulator zum Modulieren eines Replika-Pseudo-Zufallsrauschcodes mit einem Rauschsignal. Der Modular ist dabei ausgebildet zum Modulieren von Signalen, beispielsweise mittels Addition.

Gemäß einer Ausgestaltung weist die Bereitstellungseinheit ferner einen Replika-Pseudo-Zufallsrauschcode-Generator zum Bereitstellen des Replika-Pseudo-Zufallsrauschcodes auf. Gemäß einer Ausgestaltung ist ein externer, mit der Bereitstellungseinheit verbindbarer Replika-Pseudo-Zufallsrauschcode-Generator vorgesehen. Dieser ist in besonderem Maße vor einem Angriff, insbesondere Ausspähen oder Auslesen, zu schützen, da der Replika-Pseudo-Zufallsrauschcode in ungesicherter Form vorliegt.

Gemäß einer Ausgestaltung wird das Rauschsignal durch einen Rauschgenerator der Bereitstellungseinheit oder einem externen, mit der Bereitstellungseinheit verbindbaren Rauschgenerator generiert. Der Rauschgenerator ist insbesondere nicht speziell, über übliche Schutzmaßnahmen hinaus, vor Angriffen zu schützen, da aus dem Rauschsignal keine Information über den gesicherten Replika-Pseudo-Zufallsrauschcode rekonstruierbar ist.

Gemäß einer Ausgestaltung ist ein Schlüsselgenerator oder Schlüsselspeicher zum Erzeugen eines kryptographischen Schlüssels ausgebildet, wobei mittels des kryptographischen Schlüssels ein kryptographischer Replika-Pseudo-Zufallsrauschcode generierbar ist.

Gemäß einer Ausgestaltung ist die Bereitstellungseinheit auf einen Empfänger mit Empfängereinheit ausgebildet. Dabei kann vorteilhaft lediglich die Bereitstellungseinheit mit besonderen Schutzmechanismen, wie insbesondere Tamper-Schutzvorrichtungen, ausgestattet sein.

Gemäß einer Ausgestaltung ist ein Tamper-Schutz zum Erkennen einer Manipulation oder Beschädigung für die Bereitstellungseinheit vorgesehen.

Die Erfindung wird nachfolgend anhand von Ausführungsbeispielen mit Hilfe der Figuren näher erläutert.

Es zeigen:
- Figur 1: eine schematische Darstellung des Verfahrens zum Bereitstellen eines gesicherten Replika-Pseudo-Zufallsrauschsignals;
- Figur 2: eine schematische Darstellung eines Empfängers mit Empfängereinheit und Bereitstellungseinheit gemäß einem ersten Ausführungsbeispiel der Erfindung;
- Figur 3: eine schematische Darstellung eines Empfängers mit Empfängereinheit und Bereitstellungseinheit gemäß einem zweiten Ausführungsbeispiel der Erfindung.

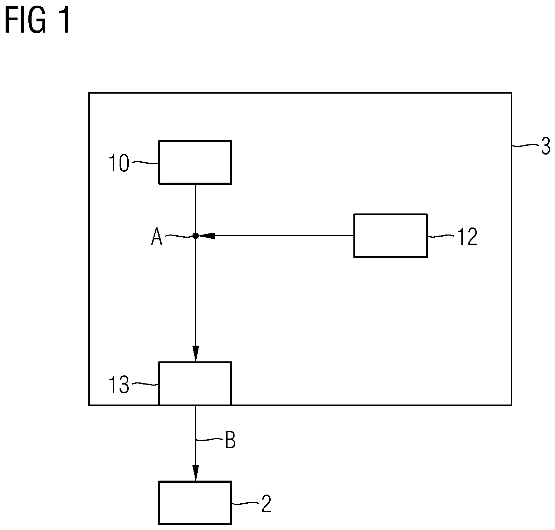

Figur 1 zeigt schematisch, wie in einem ersten Schritt ein Modulieren A eines Replika-Pseudo-Zufallsrauschcodes 10 durch eine empfängerseitige Bereitstellungseinheit 3 mit einem Rauschsignal 12 vorgesehen ist. Durch die Modulation wird ein gesichertes Replika-Pseudo-Zufallsrauschsignal 13 generiert und in einem zweiten Schritt, dem Bereitstellen B, einer Empfängereinheit 2 bereitgestellt. Das Modulieren A erfolgt dabei zeitlich vor dem Bereitstellen B. Damit soll nur ein gesichertes Replika-Pseudo-Zufallsrauschsignal 13 bereitgestellt werden, insbesondere außerhalb einer geschützten Umgebung auf einem Empfänger.

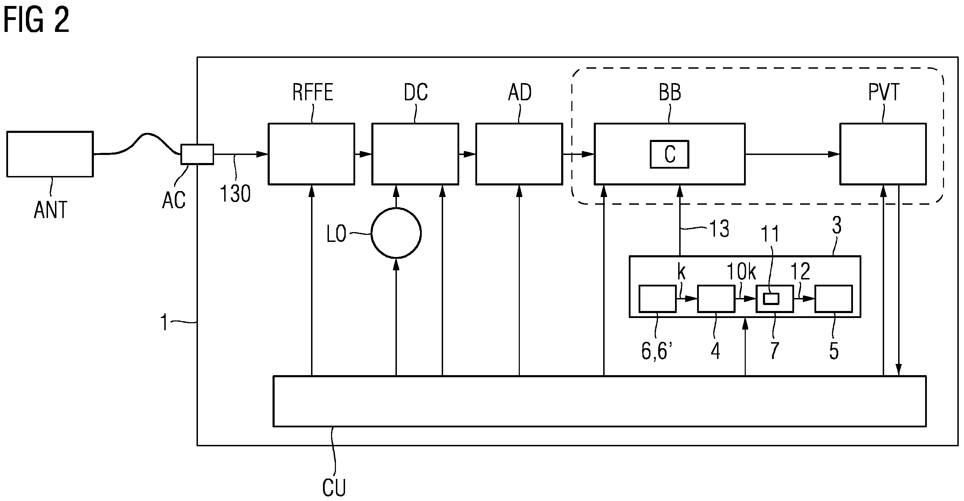

In Figur 2 ist schematisch dargestellt, wie ein Empfänger 1 mit integrierter Bereitstellungseinheit 3 gemäß einem ersten Ausführungsbeispiel der Erfindung aufgebaut ist. Der Empfänger 1 verfügt über eine Antennenbuchse AC, mittels welcher eine Antenne ANT angeschlossen werden kann. Ein von der Antenne ANT bereitgestelltes Empfangssignal 130 wird zunächst von einer Hochfrequenzbaugruppe RFFE, dem sogenannten Radio Frequency Front End, bearbeitet. Dabei findet eine Filterung und Verstärkung statt. Danach wird das Signal einem Down-Converter DC bereitgestellt, der das Signal mit einem Signal eines Local Oscillators LO mischt und somit eine Down-Conversion durchführt. Das Signal wird dann einem Analog-Digital-Wandler AD bereitgestellt. Dieser leitet das digitalisierte Signal an die Basisbandverarbeitung BB weiter. Der Empfänger wird dabei von einer Steuerung CU oder Control Unit gesteuert. Diese konfiguriert die einzelnen Baugruppen, beispielsweise um ein passendes Frequenzband zu wählen durch Änderung der Frequenz des Local Oscillators LO oder beispielsweise um den Eingangsfilter der Hochfrequenzbaugruppe RFFE zu konfigurieren oder beispielsweise um die Bandbreite oder Abtastrate des Analog-Digital-Wandlers zu konfigurieren oder um ein Modulationsverfahren der Basisbandverarbeitung auszuwählen. Die Basisbandverarbeitung BB ist typischerweise auf einem Field Programmable Gate Array Baustein, kurz FPGA-Baustein, realisiert. Der Basisbandverarbeitung BB wird durch eine Bereitstellungseinheit 3 ein gesichertes Replika-Pseudo-Zufallsrauschsignal 13 bereitgestellt. Dafür weist die Bereitstellungseinheit 3 einen Replika-Pseudo-Zufallsrauschcode-Generator 4 auf. Ein Schlüsselgenerator 6 oder Schlüsselspeicher 6' ist ferner dafür vorgesehen, einen kryptographischen Schlüssel K zu erzeugen oder abzuspeichern. Der Replika-Pseudo-Zufallsrauschcode-Generator 4 ist ausgebildet, einen kryptographischen Replika-Pseudo-Zufallsrauschcode 10K zu generieren und wählt insbesondere je nach Einsatzgebiet oder je nach Ort, an dem sich der Empfänger 1 befindet oder je nach Zeitpunkt, zu dem eine Signalverarbeitung stattfinden soll, einen geeigneten kryptographischen Schlüssel K. Insbesondere können mehrere Schlüssel vorgesehen sein, aus denen jeweils ein spezifischer Replika-Pseudo-Zufallscode generiert wird. Beispielsweise sind für verschiedene Satellitensysteme verschiedene Schlüssel vorgesehen. Es ist ferner auf der Bereitstellungseinheit 3 ein Rauschgenerator 5 vorgesehen, welcher ein Rauschsignal 12 erzeugt. Das Rauschsignal 12 sowie der kryptographische Replika-Pseudo-Zufallsrauschcode 10K werden einem Modulator 7 zugeführt. Dieser führt intern eine Modulation des kryptographischen Replika-Pseudo-Zufallsrauschcodes mit dem Rauschsignal durch, wobei in einer Zwischenstufe ein Replika-Pseudo-Zufallsrauschsignal 11, d.h. ein digitalisiertes Signal, erzeugt wird. Das Rauschsignal 12 weist einen höheren Signalpegel auf als das Replika-Pseudo-Zufallsrauschsignal 11. Mit Hilfe des Modulators 7 kann die Bereitstellungseinheit 3 den durch die Modulation mit dem Rauschsignal 12 gesicherten Replika-Pseudo-Zufallsrauschcode 13 bereitstellen. Das Bereitstellen B erfolgt an eine Empfängereinheit 2 des Empfängers 1. Es kann sich dabei beispielsweise um die Basisbandverarbeitung BB, d.h. den FPGA, handeln, sowie eine PVT-Komponente PVT, welche beispielsweise eine Software-Realisierung auf einer Central Processing Unit, kurz CPU, ist. Die PVT-Komponente PVT ist die Auswerteeinheit der Empfängereinheit 2 und ermittelt insbesondere aus einem Satellitensignal Position, Geschwindigkeit und Zeit. Auf der Komponente der Basisbandverarbeitung BB ist ein Korrelator C vorgesehen, welcher eine Korrelation des gesicherten Replika-Pseudo-Zufallsrauschsignals 13 mit dem digitalisierten Empfangssignal durchführt. Das gesicherte Replika-Pseudo-Zufallsrauschsignal 13 liegt in einer Form vor, in der nicht erkennbar ist, ob es den zugrundeliegenden kryptographischen Replika-Pseudo-Zufallsrauschcode 10K enthält. Auch dem Empfangssignal 130 bzw. dem digitalisierten Empfangssignal ist das Vorhandensein eines Pseudo-Zufallsrauschcodes aufgrund der Überlagerung mit natürlichem Rauschen nicht anzusehen. Mit Hilfe des gesicherten Replika-Pseudo-Zufallsrauschsignals 13 kann also insbesondere kein gefälschtes Signal mit einem gültigen Pseudo-Zufallsrauschcode ausgestrahlt werden.

Ein spezieller Schutz vor Angreifern sollte vorzugsweise für die Bereitstellungseinheit 3 oder zumindest für den Modulator 7 mit Replika-Pseudo-Zufallsrauschcode-Generator 4 vorgesehen sein. Damit wird sichergestellt, dass der Replika-Pseudo-Zufallsrauschcode in einer Phase, in der er noch nicht durch das Aufmodulieren des Rauschsignals 12 in diesem Rauschsignal versteckt ist, einem Angreifer bekannt wird. Die Bereitstellungseinheit 3 ist vorzugsweise als Tamper-geschützter Cryptocontroller ausgebildet.

Im Vergleich zu den Sicherheitsmaßnahmen, welche gemäß den Verfahren im Stand der Technik vorgenommen werden müssen, sind nun nicht mehr der gesamte Empfänger oder die kritischen Baugruppen, wie die Basisbandverarbeitung, die PVT-Komponente oder die Control Unit, physikalisch zu schützen. Ein Tamper-Schutz kann beispielsweise durch Vergießen in Epoxydharz oder Einbringen einer Bohrschutzfolie, ein sogenanntes wire mesh, erreicht werden. Auf vorteilhafte Weise kann eine solche Tamper-Schutzvorrichtung gemäß diesem ersten Ausführungsbeispiel der Erfindung auf ein Minimum innerhalb der Bereitstellungseinheit 3 reduziert werden. Auch Leitungen oder Kommunikationsverbindungen, welche bislang kritische Signale übertragen haben, müssen nun nur noch innerhalb der Bereitstellungseinheit 3 geschützt werden. Somit lässt sich ein sicherer Low-Cost-Receiver realisieren.

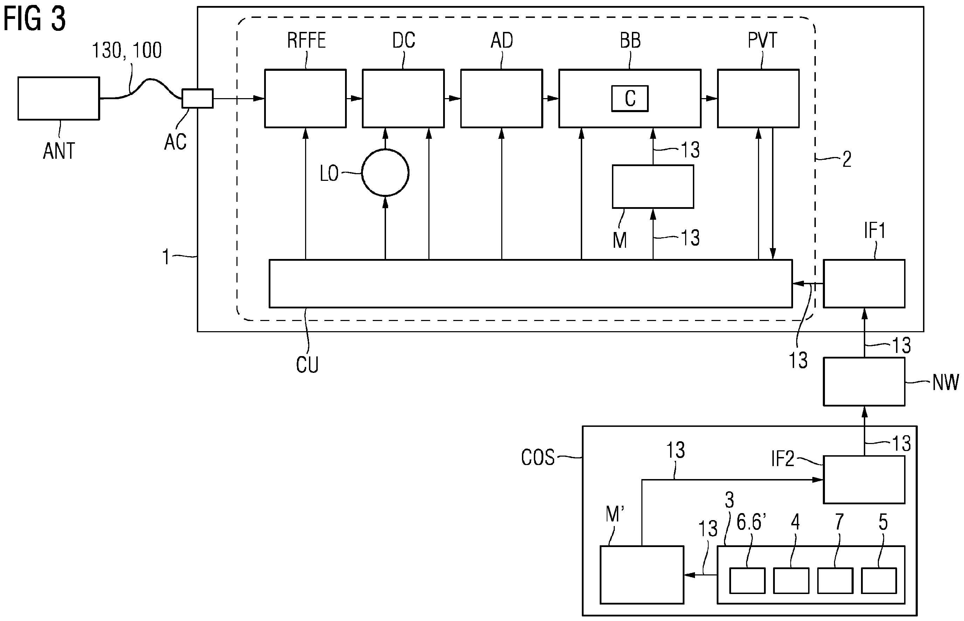

Figur 3 zeigt ein zweites Ausführungsbeispiel der Erfindung, bei welchem der Empfänger verteilt realisiert wird. Funktionsgleiche Elemente sind in den Figuren 2 und 3 mit den identischen Bezugszeichen versehen, sofern nichts anderes angegeben ist.

Der Empfänger 1 verfügt gemäß dem zweiten Ausführungsbeispiel der Erfindung über eine erste Netzwerkschnittstelle IF1 zu einem Netzwerk NW. Über das Netzwerk NW kann der Empfänger 1 mit einem Cloud-Offload-Server COS kommunizieren. Der Cloud-Offload-Server COS führt einen Teil der Signalverarbeitung durch. Er weist eine zweite Netzwerkschnittstelle IF2 zum Netzwerk NW auf. Auf dem Cloud-Offload-Server COS ist außerdem die Bereitstellungseinheit 3 ausgebildet zum Bereitstellen B des gesicherten Replika-Pseudo-Zufallsrauschsignals. In einem Speicherbereich M' wird das gesicherte Replika-Pseudo-Zufallsrauschsignal 13 als Snippet, d.h. als begrenzter Signalabschnitt, abgespeichert. Insbesondere handelt es sich um einen digitalisierten Signalausschnitt, welcher über die zweite Netzwerkschnittstelle IF2 des Cloud-Offload-Servers COS dem Netzwerk und damit über die erste Netzwerkschnittstelle IF1 der Empfängereinheit 2 des Empfängers 1 bereitgestellt wird. Unter der Empfängereinheit 2 werden in diesem Beispiel die Control Unit CU, die Basisbandverarbeitung BB, die PVT-Komponente PVT, die Hochfrequenzbaugruppe RFFE, der Down-Converter DC, der Analog-Digital-Wandler AD, der Local Oscillator LO sowie ferner ein Codespeicher M bezeichnet. Das geschützte Replika-Pseudo-Zufallsrauschsignal 13 wird beispielsweise der Steuereinheit CU der Empfängereinheit 2 übertragen, welche das Replika-Pseudo-Zufallsrauschsignal 13 in dem dafür vorgesehenen Codespeicher M abspeichert. Aus diesem Codespeicher M kann der Korrelator C zum Durchführen der Korrelation das gesicherte Pseudo-Zufallsrauschsignal 13 auslesen und ein Empfangssignal 130, welches den dazu passenden Pseudo-Zufallsrauschcode 100 aufweist, decodieren. Das Ergebnis der Korrelation wird an die PVT-Komponente PVT zum Ermitteln eines Zeitversatzes weitergeleitet.

Das Generieren des kryptographischen Replika-Pseudo-Zufallsrauschcodes 10K erfolgt vorteilhaft außerhalb eines im Feld verbauten Empfängers 1, insbesondere um ein Schlüsselmanagement zu erleichtern. Der Cloud-Offload-Server COS kann über gesicherte Kommunikationsverbindungen und in einem vor Angreifern geschützten Umfeld aktuell gültige Schlüssel und Sender erwarteter Empfangssignale bei einer entsprechenden Schlüsselverwaltung erfragen. Die kritische, vor Angriffen zu schützende Übertragung von einem Cloud-Server, der einen Replika-Pseudo-Zufallsrauschcode bereitstellt zu einem Empfänger, ist aufwendig oder je nach Einsatzgebiet nicht zu realisieren. Der Einsatz der Bereitstellungseinheit 3 gemäß dem zweiten Ausführungsbeispiel der Erfindung ermöglicht eine günstigere Übertragung für den Fall, dass die Berechnung des kryptographischen Replika-PRN-Codes 10K oder eines kryptographischen Replika-PRN-Codeabschnitts auf einem externen Server erfolgt. Durch das Verstecken des kryptographischen Replika-PRN-Codes 10 in einem künstlich erzeugten Rauschsignal innerhalb der Bereitstellungseinheit 3 und insbesondere innerhalb des Servers COS vor Übertragung eines Signals nach außen zum Empfänger 1, ermöglicht insbesondere das ungesicherte Übertragen des kryptographischen Replika-Pseudo-Zufallsrauschcodes 10K über das Netzwerk NW an den Empfänger 1.

Es können auf vorteilhafte Weise der gesamte Server COS oder alternativ nur die Bereitstellungseinheit 3 geschützt realisiert sein. Bei dem Netzwerk NW kann es sich um ein Kommunikationsnetzwerk wie beispielsweise TETRA, UMTS, LTE, WLAN oder WiMAX handeln. Bei dem Netzwerk NW kann es sich auch um das Internet oder um ein geschlossenes IP-basiertes Netzwerk handeln.

Ein Angreifer, welcher den Empfänger 1 manipuliert, kann dennoch mit einem möglicherweise aus dem Empfänger 1 auslesbaren gesicherten Replika-Pseudo-Zufallsrauschsignal 13 keinen sinnvollen Angriff starten, da er daraus keinen Pseudo-Zufallsrauschcode 10K rekonstruieren kann. Damit kann der Empfänger 1 insbesondere durch einen Angreifer kein manipuliertes Signal mit korrektem Pseudo-Zufallsrauschsignal aussenden. Auch ein Angriff auf die Netzwerkverbindungen innerhalb des Netzwerks NW bleibt erfolglos, da der ursprüngliche kryptographische Replika-Pseudo-Zufallsrauschcode 10K nur in gesicherter Form im Rauschsignal 12 versteck vorliegt.

## Patentansprüche

1. Verfahren zum Bereitstellen (B) eines gesicherten Replika-Pseudozufallsrauschsignals (13) von einer empfängerseitigen Bereitstellungseinheit an eine Empfängereinheit (2), wobei ein Replika-Pseudozufallsrausch-Code (10) als eine Codefolge ausgebildet ist, welche in einem Korrelationsverfahren empfängerseitig einsetzbar ist, um ein Empfangssignal (130) von einem Sender detektieren oder decodieren zu können, wenn der Sender einen zu dem Replika-Pseudozufallsrausch-Code (10) gehörigen Pseudozufallsrausch-Code (100) zur Modulation des Empfangssignales (130) verwendet hat, wobei der Replika-Pseudozufallsrausch-Code (10) durch die empfängerseitige Bereitstellungseinheit (3) mit einem Rauschsignal (12) moduliert wird (A) um das gesichertes Replika-Pseudozufallsrauschsignal (13) zu generieren.

2. Verfahren nach Anspruch 1, wobei aus dem Replika-Pseudozufallsrausch-Code (10) zunächst ein moduliertes Replika-Pseudozufallsrauschsignal (11) generiert wird.

3. Verfahren nach Anspruch 2, wobei das Rauschsignal (12) einen höheren Pegel aufweist als das modulierte Replika-Pseudozufallsrauschsignal (11).

4. Verfahren nach einem der vorstehenden Ansprüche, wobei das gesicherte Replika-Pseudozufallsrauschsignal (13) mit dem durch die Empfängereinheit (2) empfangenen Empfangssignal (130) korreliert wird.

5. Verfahren nach einem der vorstehenden Ansprüche, wobei ein in dem durch die Empfängereinheit (2) empfangenen Empfangssignal (130) enthaltener Pseudozufallsrauschcode (100) mittels einer Korrelationsmethode mit Hilfe des gesicherten Replika-Pseudozufallsrauschsignals (13) dekodierbar ist.

6. Verfahren nach einem der vorstehenden Ansprüche, wobei ein in dem durch die Empfängereinheit (2) empfangenen Empfangssignal (130) enthaltenes Pseudozufallsrauschsignal (110) mittels einer Korrelationsmethode ausgewertet wird.

7. Verfahren nach einem der vorstehenden Ansprüche, wobei der Replika-Pseudozufallsrausch-Code (10) durch einen Replika-Pseudozufallsrausch-Code-Generator (4) der Bereitstellungseinheit (3) oder einen externen, mit der Bereitstellungseinheit (3) verbindbaren Replika-Pseudozufallsrausch-Code-Generator generiert wird.

8. Verfahren nach einem der vorstehenden Ansprüche, wobei als Replika-Pseudozufallsrausch-Code (10) ein kryptographischer Replika-Pseudozufallsrausch-Code (10K) generiert wird.

9. Verfahren nach einem der vorstehenden Ansprüche, wobei das Rauschsignal (12) als ein zufälliges oder pseudozufälliges Rauschsignal ausgebildet wird.

10. Verfahren nach einem der vorstehenden Ansprüche, wobei der Replika-Pseudozufallsrausch-Code (10) durch die Bereitstellungseinheit (3) durch eine Addition mit dem Rauschsignal (12) moduliert wird.

11. Verfahren nach einem der vorstehenden Ansprüche, wobei das Rauschsignal (12) durch einen Rauschgenerator (5) der Bereitstellungseinheit (3) oder einen externen, mit der Bereitstellungseinheit (3) verbindbaren Rauschgenerator (5) generiert wird.

12. Verfahren nach einem der vorstehenden Ansprüche, wobei ein Pegel des Rauschsignals (12) konstant über der Zeit oder zeitlich variabel generiert wird.

13. Verfahren nach einem der vorstehenden Ansprüche, wobei das gesicherte Replika-Pseudozufallsrauschsignal (13) der Empfängereinheit (2) von einem Sicherheitsmodul oder einem Sicherheits-Cloud-Server bereitgestellt wird, insbesondere kontinuierlich oder in Form einzelner Abschnitte oder ergänzt durch Zusatzinformation.

14. Verfahren nach einem der vorstehenden Ansprüche, wobei das gesicherte Replika-Pseudozufallsrauschsignal (13) einen Marker aufweist zur Kennzeichnung eines empfängerseitig erzeugten Signales.

15. Bereitstellungseinheit (3) zum Bereitstellen (B) eines gesicherten Replika-Pseudozufallsrauschsignals (13) an eine Empfängereinheit (2), mit einem Modulator (7) zum Modulieren (A) eines Replika-Pseudozufallsrausch-Codes (10) mit einem Rauschsignal (12) um das gesicherten Replika-Pseudozufallsrauschsignal zu generieren, wobei ein Replika-Pseudozufallsrausch-Code (10) als eine Codefolge ausgebildet ist, welche in einem Korrelationsverfahren empfängerseitig einsetzbar ist, um ein Empfangssignal (130) von einem Sender detektieren oder decodieren zu können, wenn der Sender einen zu dem Replika-Pseudozufallsrausch-Code (10) gehörigen Pseudozufallsrausch-Code (100) zur Modulation des Empfangssignales (130) verwendet hat.

16. Bereitstellungseinheit (3) nach Anspruch 15, wobei ein im Empfangssignal (130) enthaltener Pseudozufallsrauschcode (100) mittels einer Korrelationsmethode mit Hilfe des gesicherten Replika-Pseudozufallsrauschsignals (13) dekodierbar ist.

17. Bereitstellungseinheit (3) nach Anspruch 15 oder 16, wobei der Replika-Pseudozufallsrausch-Code (10) durch einen Replika-Pseudozufallsrausch-Code-Generator (4) der Bereitstellungseinheit (3) oder einen externen, mit der Bereitstellungseinheit (3) verbindbaren Replika-Pseudozufallsrausch-Code-Generator generierbar ist.

18. Bereitstellungseinheit (3) nach einem der Ansprüche 15 bis 17, wobei das Rauschsignal (12) durch einen Rauschgenerator (5) der Bereitstellungseinheit (3) oder einen externen, mit der Bereitstellungseinheit (3) verbindbaren Rauschgenerator generierbar ist.

19. Bereitstellungseinheit (3) nach einem der Ansprüche 15 bis 18, wobei ein Schlüsselgenerator (6) oder Schlüsselspeicher (6') zum Erzeugen eines kryptographischen Schlüssels (K) ausgebildet ist, wobei mittels des kryptographischen Schlüssels (K) ein kryptographischer Replika-Pseudozufallsrausch-Code (10K) generierbar ist.

20. Bereitstellungseinheit (3) nach einem der Ansprüche 15 bis 19, wobei die Bereitstellungseinheit (3) auf einem Empfänger (1) mit Empfängereinheit (2) ausgebildet ist.

21. Bereitstellungseinheit (3) nach Anspruch 20, wobei ein Tamperschutz zum Erkennen einer Manipulation oder Beschädigung für die Bereitstellungseinheit (3) vorgesehen ist.

## Claims

1. Method for providing (B) a secured replica pseudo-random noise signal (13) from a receiver-end provision unit to a receiver unit (2), wherein a replica pseudo-random noise code (10) is in the form of a code sequence that can be used in a correlation method at the receiver end in order to be able to detect or decode a received signal (130) from a transmitter when the transmitter has used a pseudo-random noise code (100) associated with the replica pseudo-random noise code (10) to modulate the received signal (130), wherein the replica pseudo-random noise code (10) is modulated (A) with a noise signal (12) by the receiver-end provision unit (3) in order to generate the secured replica pseudo-random noise signal (13).

2. Method according to Claim 1, wherein a modulated replica pseudo-random noise signal (11) is generated from the replica pseudo-random noise code (10) first of all.

3. Method according to Claim 2, wherein the noise signal (12) has a higher level than the modulated replica pseudo-random noise signal (11).

4. Method according to one of the preceding claims, wherein the secured replica pseudo-random noise signal (13) is correlated with the received signal (130) received by the receiver unit (2).

5. Method according to one of the preceding claims, wherein a pseudo-random noise code (100) contained in the received signal (130) received by the receiver unit (2) can be decoded by means of a correlation method using the secured replica pseudo-random noise signal (13).

6. Method according to one of the preceding claims, wherein a pseudo-random noise signal (110) contained in the received signal (130) received by the receiver unit (2) is evaluated by means of a correlation method.

7. Method according to one of the preceding claims, wherein the replica pseudo-random noise code (10) is generated by a replica pseudo-random noise code generator (4) of the provision unit (3) or by an external replica pseudo-random noise code generator that can be connected to the provision unit (3).

8. Method according to one of the preceding claims, wherein the replica pseudo-random noise code (10) generated is a cryptographic replica pseudo-random noise code (10K).

9. Method according to one of the preceding claims, wherein the noise signal (12) is produced as a random or pseudo-random noise signal.

10. Method according to one of the preceding claims, wherein the replica pseudo-random noise code (10) is modulated by the provision unit (3) by adding it to the noise signal (12) .

11. Method according to one of the preceding claims, wherein the noise signal (12) is generated by a noise generator (5) of the provision unit (3) or by an external noise generator (5) that can be connected to the provision unit (3) .

12. Method according to one of the preceding claims, wherein a level of the noise signal (12) is generated so as to be constant over time or so as to be variable over time.

13. Method according to one of the preceding claims, wherein the secured replica pseudo-random noise signal (13) is provided for the receiver unit (2) by a security module or a security cloud server, in particular continuously or in the form of individual sections or with the addition of supplementary information.

14. Method according to one of the preceding claims, wherein the secured replica pseudo-random noise signal (13) has a marker for identifying a signal produced at the receiver end.

15. Provision unit (3) for providing (B) a secured replica pseudo-random noise signal (13) to a receiver unit (2), having a modulator (7) for modulating (A) a replica pseudo-random noise code (10) with a noise signal (12) in order to generate the secured replica pseudo-random noise signal, wherein a replica pseudo-random noise code (10) is in the form of a code sequence that can be used in a correlation method at the receiver end in order to be able to detect or decode a received signal (130) from a transmitter when the transmitter has used a pseudo-random noise code (100) associated with the replica pseudo-random noise code (10) to modulate the received signal (130).

16. Provision unit (3) according to Claim 15, wherein a pseudo-random noise code (100) contained in the received signal (130) can be decoded by means of a correlation method using the secured replica pseudo-random noise signal (13).

17. Provision unit (3) according to Claim 15 or 16, wherein the replica pseudo-random noise code (10) can be generated by a replica pseudo-random noise code generator (4) of the provision unit (3) or by an external replica pseudo-random noise code generator that can be connected to the provision unit (3).

18. Provision unit (3) according to one of Claims 15 to 17, wherein the noise signal (12) can be generated by a noise generator (5) of the provision unit (3) or by an external noise generator that can be connected to the provision unit (3).

19. Provision unit (3) according to one of Claims 15 to 18, wherein a key generator (6) or key memory (6') is designed to produce a cryptographic key (K), wherein the cryptographic key (K) can be used to generate a cryptographic replica pseudo-random noise code (10K).

20. Provision unit (3) according to one of Claims 15 to 19, wherein the provision unit (3) is produced on a receiver (1) having a receiver unit (2).

21. Provision unit (3) according to Claim 20, wherein there is provision for tamperproofing for detecting manipulation or damage for the provision unit (3).

## Revendications

1. Procédé pour la mise à disposition (B) d'un signal de bruit pseudo-aléatoire de réplique (13) d'une unité de mise à disposition côté récepteur à une unité réceptrice (2), dans lequel un code de bruit pseudo-aléatoire de réplique (10) est conçu comme une suite de code qui peut être insérée côté récepteur dans un procédé de corrélation, afin de pouvoir détecter ou décoder un signal de réception (130) provenant d'un émetteur, lorsque l'émetteur a utilisé un code de bruit pseudo-aléatoire (100) appartenant au code de bruit pseudo-aléatoire de réplique (10), pour la modulation du signal de réception (130), dans lequel le code de bruit pseudo-aléatoire de réplique (10) est modulé (A) par l'unité de mise à disposition côté récepteur (3) avec un signal de bruit (12) afin de générer le signal de bruit pseudo-aléatoire de réplique sécurisé (13).

2. Procédé selon la revendication 1, dans lequel, à partir du code de bruit pseudo-aléatoire de réplique (10), un signal de bruit pseudo-aléatoire de réplique modulé (11) est d'abord généré.

3. Procédé selon la revendication 2, dans lequel le signal de bruit (12) présente un niveau plus élevé que le signal de bruit pseudo-aléatoire de réplique modulé (11).

4. Procédé selon l'une des revendications précédentes, dans lequel le signal de bruit pseudo-aléatoire de réplique sécurisé (13) est corrélé avec le signal de réception (130) reçu par l'unité réceptrice (2).

5. Procédé selon l'une des revendications précédentes, dans lequel un code de bruit pseudo-aléatoire (100) contenu dans le signal de réception (130) reçu par l'unité réceptrice (2) peut être décodé au moyen d'une méthode de corrélation à l'aide du signal de bruit pseudo-aléatoire sécurisé (13).

6. Procédé selon l'une des revendications précédentes, dans lequel un signal de bruit pseudo-aléatoire (110) contenu dans le signal de réception (130) reçu par l'unité réceptrice (2) est analysé au moyen d'une méthode de corrélation.

7. Procédé selon l'une des revendications précédentes, dans lequel le code de bruit pseudo-aléatoire de réplique (10) est généré par un générateur de code de bruit pseudo-aléatoire de réplique (4) de l'unité de mise à disposition (3) ou un générateur de code de bruit pseudo-aléatoire de réplique externe pouvant être relié à l'unité de mise à disposition (3).

8. Procédé selon l'une des revendications précédentes, dans lequel, en tant que code de bruit pseudo-aléatoire de réplique (10), un code de bruit pseudo-aléatoire de réplique cryptographique (10K) est généré.

9. Procédé selon l'une des revendications précédentes, dans lequel le signal de bruit (12) est conçu comme un signal de bruit aléatoire ou pseudo-aléatoire.

10. Procédé selon l'une des revendications précédentes, dans lequel le code de bruit pseudo-aléatoire de réplique (10) est modulé par l'unité de mise à disposition (3) par une addition avec le signal de bruit (12).

11. Procédé selon l'une des revendications précédentes, dans lequel le signal de bruit (12) est généré par un générateur de bruit (5) de l'unité de mise à disposition (3) ou un générateur de bruit externe (5) pouvant être relié à l'unité de mise à disposition (3).

12. Procédé selon l'une des revendications précédentes, dans lequel un niveau du signal de bruit (12) est généré de manière constante dans le temps ou variable dans le temps.

13. Procédé selon l'une des revendications précédentes, dans lequel le signal de bruit pseudo-aléatoire de réplique sécurisé (13) de l'unité réceptrice (2) est mis à disposition par un module de sécurité ou un serveur de cloud de sécurité, plus particulièrement de manière continue ou sous la forme de différentes portions ou complété par des informations supplémentaires.

14. Procédé selon l'une des revendications précédentes, dans lequel le signal de bruit pseudo-aléatoire de réplique sécurisé (13) comprend un marqueur pour l'identification d'un signal généré côté récepteur.

15. Unité de mise à disposition (3) pour la mise à disposition (B) d'un signal de bruit pseudo-aléatoire de réplique sécurisé (13) au niveau d'une unité réceptrice (2), avec un modulateur (7) pour la modulation (A) d'un code de bruit pseudo-aléatoire de réplique (10) avec un signal de bruit (12) afin de générer le signal de bruit pseudo-aléatoire sécurisé, dans laquelle un code de bruit pseudo-aléatoire de réplique (10) est conçu comme une suite de code qui peut être insérée côté récepteur dans un procédé de corrélation, afin de pouvoir détecter ou décoder un signal de réception (130) provenant d'un émetteur, lorsque l'émetteur a utilisé un code de bruit pseudo-aléatoire (100) appartenant au code de bruit pseudo-aléatoire de réplique (10) pour la modulation du signal de réception (130).

16. Unité de mise à disposition (3) selon la revendication 15, dans laquelle un code de bruit pseudo-aléatoire (100) contenu dans le signal de réception (130) peut être décodé au moyen d'une méthode de corrélation à l'aide du signal de bruit pseudo-aléatoire de réplique (13).

17. Unité de mise à disposition (3) selon la revendication 15 ou 16, dans laquelle le code de bruit pseudo-aléatoire de réplique (10) peut être généré par un générateur de code de bruit pseudo-aléatoire de réplique (4) de l'unité de mise à disposition (3) ou un générateur de code de bruit pseudo-aléatoire de réplique externe pouvant être relié à l'unité de mise à disposition (3).

18. Unité de mise à disposition (3) selon l'une des revendications 15 à 17, dans laquelle le signal de bruit (12) peut être généré par un générateur de bruit (5) de l'unité de mise à disposition (3) ou un générateur de bruit externe pouvant être relié à l'unité de mise à disposition (3).

19. Unité de mise à disposition (3) selon l'une des revendications 15 à 18, dans laquelle un générateur de clé (6) ou une mémoire de clé (6') est conçue pour la génération d'une clé cryptographique (K), dans laquelle, au moyen de la clé cryptographique (K), un code de bruit pseudo-aléatoire de réplique cryptographique (10K) peut être généré.

20. Unité de mise à disposition (3) selon l'une des revendications 15 à 19, dans laquelle l'unité de mise à disposition (3) est disposée sur un récepteur (1) avec l'unité réceptrice (2).

21. Unité de mise à disposition (3) selon la revendication 20, dans laquelle une protection anti-falsification est prévue pour la détection d'une manipulation ou d'un endommagement pour l'unité de mise à disposition (3).
